## Europäisches Patentamt

## European Patent Office

## Office européen des brevets

(19)

(11) Veröffentlichungsnummer : **0 111 348**
**B1**

(12) **EUROPÄISCHE PATENTSCHRIFT**

(45) Veröffentlichungstag der Patentschrift :
04.05.88

(21) Anmeldenummer : 83201467.4

(22) Anmeldetag : 13.10.83

(51) Int. Cl.⁴ : **G 01 L 13/02, G 01 L 9/12**

(54) Kapazitiver Differenzdrucksensor.

(30) Priorität : 16.10.82 DE 3238430

(43) Veröffentlichungstag der Anmeldung :
20.06.84 Patentblatt 84/25

(45) Bekanntmachung des Hinweises auf die Patenterteilung : 04.05.88 Patentblatt 88/18

(84) Benannte Vertragsstaaten :
DE FR GB

(56) Entgegenhaltungen :
DE-A- 2 364 027
GB-A- 1 138 987
PATENT ABSTRACTS OF JAPAN, Band 6, Nr. 46 (P-
107) (924) März 24, 1982

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB

(72) Erfinder : Orlowski, Reiner, Dr.
Rotdornweg 17
D-2085 Quickborn (DE)
Erfinder : Kobs, Rolf
Kastanienring 5
D-2082 Tornesch (DE)
Erfinder : Liehr, Manfred
Strehlowweg 38
D-2000 Hamburg 52 (DE)

(74) Vertreter : Meier, Friedrich, Dipl.-Ing. et al
Philips Patentverwaltung GmbH Wendenstrasse 35
Postfach 10 51 49
D-2000 Hamburg 1 (DE)

EP 0 111 348 B1

**Beschreibung**

Die Erfindung bezieht sich auf einen Differenzdrucksensor, bestehend aus einem mit Schichtelektroden belegten Grundkörper aus Isoliermaterial und mindestens zwei Membranen, die mit den Schichtelektroden je eine von der Membranauslenkung abhängige Kapazität bilden, wobei die Schichtelektroden mit den Membranen geschlossene, untereinander verbundene und mit einer Flüssigkeit gefüllte Hohlräume bilden.

Differenzdrucksensoren werden in Durchflußmeßgeräten verwendet, die den Durchfluß einer Flüssigkeit durch eine in einer Rohrleitung angebrachten Blende aus dem mit Hilfe eines Differenzdrucksensors beiderseits der Blende gemessenen Druckabfall ermitteln.

Aus der DE-OS 23 64 027 ist ein Differenzdrucksensor bekannt, der aus einem metallischen Hohlzylinder besteht, an dessen Stirnseiten Druckmeßmembranen angeschweißt sind. Der Hohlzylinder ist mit Isoliermaterial ausgegossen. Die Membranen schließen untereinander verbundene und mit einer inkompressiblen Flüssigkeit gefüllte Hohlräume ab und bilden mit auf dem Isoliermaterial aufgebrachten Schichtelektroden Kondensatoren, deren Kapazität von der druckbedingten Membranauslenkung abhängt. Die Membranen bestehen aus Metall und bilden Teile eines elektrischen Abgriffes. Die metallischen Membranen können ein elektrisches Potential aufweisen, so daß Funkenbildung gegen geerdete Geräteteile nicht ausgeschlossen werden kann. Deshalb würde bei der Durchflußmessung explosiver Flüssigkeiten mit Hilfe des bekannten Differenzdrucksensors Explosionsgefahr bestehen.

Aus Patent Abstracts of Japan, Band 6, Nr. 46 (P-107) (924), 24.03.1982, ist ein kapazitiver Drucksensor bekannt, bei dem die Membran aus einer Isolierscheibe besteht. Auf der dem Grundkörper des Sensors zugewandten Seite der Isolierscheibe befinden sich Schichtelektroden. Bei zu starken Auslenkungen der Membranen kann es zu deren Zerstörung führen.

Aufgabe der vorliegenden Erfindung ist es, einen auch zur Durchflußmessung explosiver Flüssigkeiten oder Gase geeigneten Differenzdrucksensor zu schaffen, bei dem eine Zerstörung der Membranen durch zu starke Auslenkung verhindert wird.

Diese Aufgabe wird erfindungsgemäß dadurch gelöst, daß die Membranen aus Isoliermaterial gefertigt und auf den dem Grundkörper zugewandten Seiten mit weiteren Schichtelektroden belegt sind und daß der Grundkörper und/oder die Membranen auf einander zugekehrte Flächen mit Stützkörpern versehen sind.

Der erfindungsgemäße Differenzdrucksensor ist auf seiner Außenseite frei von elektrischen Leitungen, die elektrische Spannungen führen können. Durch die Stützkörper wird die Auslenkung der Membranen auf das zulässige Maß begrenzt und damit eine Zerstörung der Membranen bei zu großen Druckdifferenzen verhindert.

In Ausgestaltung der Erfindung besteht das Isoliermaterial aus Keramik, vorzugsweise aus Aluminiumoxidkeramik. Keramik, insbesondere Aluminiumoxidkeramik, ist sehr beständig gegen chemisch agressive Flüssigkeiten und Gase, ist unter Druck nicht Plastisch verformbar und ist gegen Druck und Temperatur hoch belastbar.

Werden der Grundkörper und die Membranen über Distanzringe aus Schmelzlot miteinander verbunden, so ist über die Dicke der Distanzringe der Elektrodenabstand und damit die Kapazität der Meßkondensatoren einstellbar.

Isolierend ausgebildete Stützkörper verhindern ferner einen elektrischen Kurzschluß zwischen den Elektroden der Meßkondensatoren.

Vorteilhaft ist es, in die Stützkörper rillenartige mit dem Füllkanal verbundene Vertiefungen einzuformen. Dadurch kann sich die Flüssigkeit bei einer impulsartigen Druckänderung schnell verteilen, wodurch die Reaktionszeit des Sensors stark verkürzt wird.

Anhand der Zeichnungen werden einige Ausführungsbeispiele der Erfindung beschrieben und deren Wirkungsweise erläutert. Es zeigen

Fig. 1 das Schnittbild eines Differenzdrucksensors,

Fig. 2 die Draufsicht auf den Grundkörper unterhalb der Membrane,

Fig. 3 das Schnittbild eines Differenzdrucksensors, dessen Membranen mit Stützkörpern versehen sind,

Fig. 4 ein Ausführungsbeispiel des Grundkörpers mit isolierenden Stützkörpern,

Fig. 5 einen Schnitt längs der Geraden V-V in Fig. 4 und

Fig. 6 den Grundkörper mit einem Stützkörper, der rillenartige Vertiefungen aufweist.

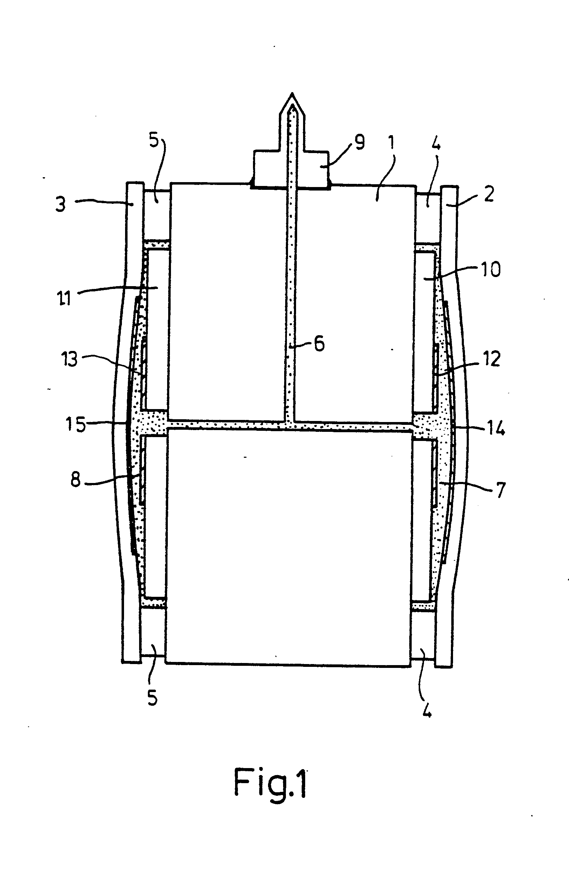

Der in Fig. 1 im Schnitt dargestellte Differenzdrucksensor besteht aus einem zylindrischen Grundkörper 1, auf dessen Stirnflächen zwei elastische Membranen 2 und 3 mit Glaslot in Form von Distanzringen 4 und 5 befestigt sind. Der Grundkörper 1 und die nicht leitend miteinander verbundenen Membranen 2 und 3 bestehen aus Aluminiumoxidkeramik. Der Grundkörper 1 und die Membranen 2 und 3 bestehen aus dem gleichen Material, so daß der Grundkörper 1 und die Membranen 2 und 3 dieselbe Temperaturdehnung aufweisen. Dadurch werden temperaturbedingte Meßfehler vermieden. Von den Membranen 2 und 3, den Distanzringen 4 und 5 und den Stirnflächen des Grundkörpers 1 gebildete Hohlräume 7 und 8 sind über einen Kanal 6 mit einer inkompressiblen, isolierenden Flüssigkeit gefüllt. Die Flüssigkeit kann beispielsweise Silikonöl oder ein Polymer eines Trifluorvenylchlorides sein. Der Kanal 6 ist mit einem Dichtungsstutzen 9 verschlossen.

Auf dem Grundkörper 1 sind die Stützkörper 10 und 11 angebracht, auf deren planer Oberfläche sich schichtförmige Elektroden 12 und 13 befinden. Die dem Grundkörper zugewandten Seiten der Membranen 2 bzw. 3 sind mit weiteren Schichtelektroden 14 bzw. 15 belegt, die mit den Elektroden 12 bzw. 13 Kondensatoren bilden, deren Kapazität von der Auslenkung der Membranen 2 bzw. 3 abhängt. Die Distanzringe 4 und 5, die Elektroden 12 bis 15 und die Stützkörper 10 und 11 können in Dickschichttechnik auf den Grundkörper 1 bzw. auf die Membranen 2 und 3 aufgebracht werden. Über die Dicke der Distanzringe 4 und 5 ist der Abstand der Elektroden 14 und 15 von den Elektroden 12 und 13 und damit die Kapazität der von den Elektroden 12 und 14 bzw. 13 und 15 gebildeten Kondensatoren einstellbar. Die Stützkörper 10 und 11 weisen annähernd die gleiche Dicke wie die Distanzringe 4 und 5 auf.

Die Flüssigkeit des Differenzdrucksensors weist einen Überdruck auf, der die Membranen 2 und 3 ausbaucht, wie es in Fig. 1 überhöht eingezeichnet ist. Der Meßbereich des Differenzdrucksensors ist beispielhaft gleich dem doppelten Überdruck der Füllflüssigkeit.

Wenn auf die Membrane 3 ein größerer Druck als auf die Membrane 2 einwirkt, nimmt der Grad der Ausbauchung der Membrane 3 ab, und die aus dem Hohlraum 8 durch den Kanal 6 in den Hohlraum 7 fließende Flüssigkeit vergrößert die Ausbauchung der Membrane 2. Dieses führt zu einer Veränderung der beiden Kapazitäten, aus denen der auf die Membranen einwirkende Differenzdruck ermittelt wird.

Mit der Veränderung des Innendruckes kann die Ausbauchung und damit auch die Vorspannung der Membranen verändert werden. Aus der Vorspannung der Membrane ergibt sich der Meßbereich des Differenzdrucksensors. Die Ausbauchung bewirkt eine mechanische Verspannung der Membranen, die zur Nullpunktstabilität und zur Meßgenauigkeit beiträgt.

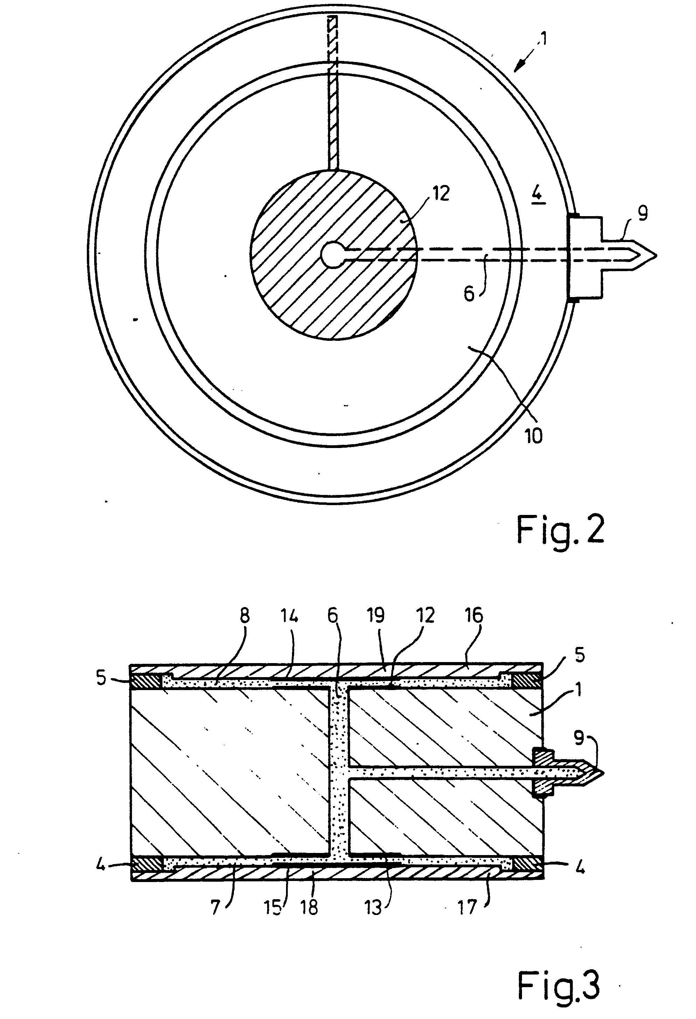

Die Fig. 2 zeigt den Grundkörper 1 des Differenzdrucksensors mit der auf dem Stützkörper 10 aufgebrachten Schichtelektrode 12. Der Distanzring 4 umschließt den Stützkörper 10. Der vom Dichtungsstutzen 9 verschlossene Füllkanal 6 ist gestrichelt eingezeichnet. Der Distanzring 4 besteht beispielsweise aus einem elektrisch nicht leitenden, glasartigen Schmelzlot, das über die elektrischen Anschlußbahnen der Schichtelektroden 12 gedruckt ist.

In der Fig. 3 ist ein Schnittbild eines Differenzdrucksensors dargestellt, dessen Membranen 16 und 17 Stützkörper 18 und 19 aufweisen, die als plattformartige Erhebungen auf den dem Grundkörper 1 zugewandten Seiten der Membranen 16 und 17 ausgebildet sind. Sie sind mit Schichtelektroden 14 und 15 belegt und verhindern die Zerstörung der Membranen 16 und 17 bei einseitigem Überdruck.

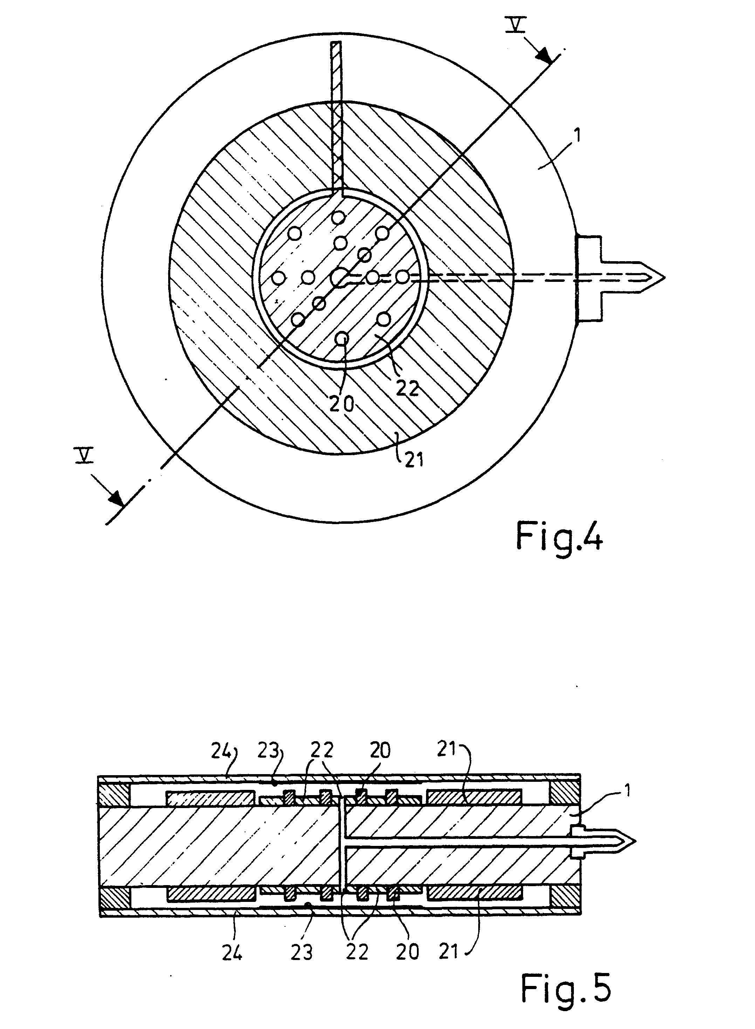

Die Figuren 4 und 5 zeigen eine Ausführungsform, bei der auf den Grundkörper 1 isolierende Stützkörper 20 und 21 aufgebracht sind. Der Stützkörper 21 ist ringförmig ausgebildet und umschließt die Elektrode 22. Die noppenförmig ausgebildeten Stützkörper 20 befinden sich innerhalb der von der Elektrode 22 bedeckten Fläche. Die Stützkörper 20 und 21 sind auf den Grundkörper 1 in Dickschichttechnik aufgetragen. Sie können auch bei der Herstellung des Grundkörpers 1 aus dem Grundkörpermaterial ausgeformt werden. Die Schichtelektroden 22 können dünner als die Stützkörper 20 und 21 ausgebildet sein, damit bei einer Auslenkung der Membranen 24 die Elektroden 23 von den Stützkörpers 20 und 21 abgestützt werden, so daß ein Kurzschluß zwischen den Elektroden 22 und 23 verhindert wird. Der Stützkörper 21 kann ebenfalls mit rillenartigen Vertiefungen versehen sein. Er kann aber auch noppenförmig ausgebildet sein.

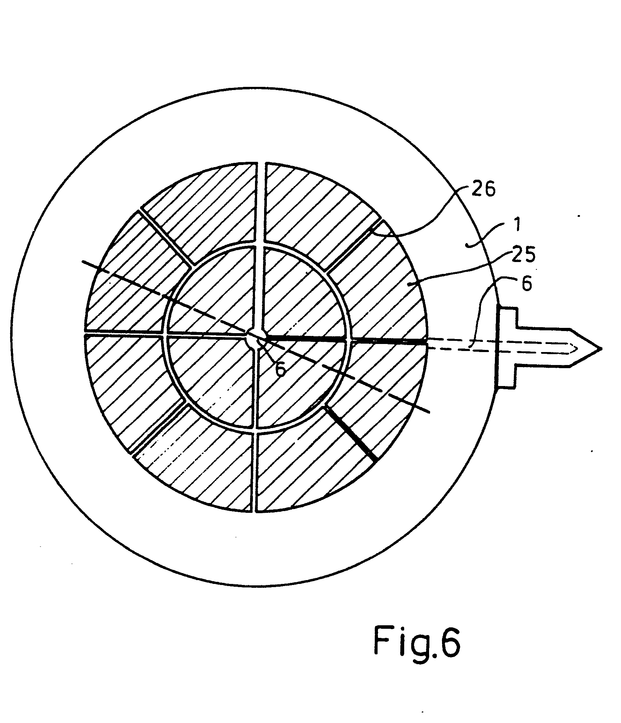

Die Fig. 6 zeigt den Grundkörper 1 mit dem in Dickschichttechnik auftragbaren Stützkörper 25, der rillenartige Vertiefungen 26 aufweist. Die Vertiefungen 26 sind mit dem Füllkanal 6 verbunden, damit sich die Füllflüssigkeit beim Füllen und bei Änderungen des auf die Membranen einwirkenden Differenzdruckes leicht verteilen kann. Auch der Stützkörper 25 kann noppenförmig ausgebildet sein.

**Patentansprüche**

1. Differenzdrucksensor, bestehend aus einem mit Schichtelektroden (12, 13) belegten Grundkörper (1) aus Isoliermaterial und mindestens zwei Membranen (2, 3), die mit den Schichtelektroden (12, 13) je eine von der Membranauslenkung abhängige Kapazität bilden, wobei die Schichtelektroden (12, 13) mit den Membranen (2, 3) geschlossene, untereinander verbundene und mit einer Flüssigkeit gefüllte Hohlräume (7, 8) bilden, dadurch gekennzeichnet, daß die Membranen (2, 3) aus Isoliermaterial gefertigt und auf den dem Grundkörper (1) zugewandten Seiten mit weiteren Schichtelektroden (14, 15) belegt sind und daß der Grundkörper (1) und/oder die Membranen (2, 3) auf einander zugekehrte Flächen mit Stützkörpern (10 ; 11 ; 18 ; 19 ; 20 ; 25) versehen sind.

2. Differenzdrucksensor nach Anspruch 1, dadurch gekennzeichnet, daß die Stützkörper (20) isolierend ausgebildet sind.

3. Differenzdrucksensor nach Anspruch 1 oder 2, dadurch gekennzeichnet, daß in die Stützkörper (25) rillenartige mit einem Füllkanal (6) verbundene Vertiefungen (26) eingeformt sind.

4. Differenzdrucksensor nach einem der vorhergehenden Ansprüche, dadurch gekennzeichnet, daß das Isoliermaterial aus Keramik, vorzugsweise aus Aluminiumoxidkeramik, besteht.

5. Differenzdrucksensor nach einem der vorhergehenden Ansprüche, dadurch gekennzeichnet, daß der Grundkörper (1) und die Membranen (2, 3) über Distanzringe (4, 5) aus Schmelzlot, vorzugsweise aus elektrisch isolierendem Glaslot, miteinander verbunden sind.

**Claims**

1. A differential pressure transducer consisting of a body (1) of insulating material provided with film electrodes (12, 13) and of at least two diaphragms (2, 3) which form a capacitance in conjunction with each of the film electrodes (12, 13), said capacitance being dependent on the diaphragm deflection, said film electrodes (12, 13) and diaphragms (2, 3) forming closed, interconnected cavities (7, 8) which are filled with a liquid, characterized in that the diaphragms (2, 3) are made of insulating material and are provided with further film electrodes (14, 15) on their sides which face the body (1), the body (1) and/or the diaphragms (2, 3) being provided with supports (10 ; 11 ; 18 ; 19 ; 20 ; 25) on facing surfaces.

2. A differential pressure transducer as claimed in Claim 1, characterized in that the supports (20) are formed so as to be insulating.

3. A differential pressure transducer as claimed in Claim 1 or 2, characterized in that the supports (25) are provided with groove-like recesses (26) which are connected to a filling duct (6).

4. A differential pressure transducer as claimed in any one of the preceding Claims, characterized in that the insulating material is a ceramic material, preferably aluminium oxide ceramic.

5. A differential pressure transducer as claimed in any one of the preceding Claims, characterized in that the body (1) and the diaphragms (2, 3) are interconnected by means of spacing rings (4, 5) of solder, preferably electrically insulating glass solder.

**Revendications**

1. Transducteur de pression différentielle constitué par un corps (1) en matériau isolant muni d'électrodes en forme de couche (12, 13) et au moins deux membranes (2, 3) qui, conjointement avec les électrodes en forme de couche (12, 13), forment chacune une capacité dépendante de la flexion des membranes, lesdites électrodes en forme de couche (12, 13) formant avec les membranes (2 , 3) des cavités fermées (7, 8), liées entre elles et remplies d'un liquide, caractérisé en ce que les membranes (2, 3) sont en matériau isolant et sont munies d'électrodes supplémentaires en forme de couche (14, 15) sur les faces situées du côté du corps (1) et en ce que le corps (1) et/ou les membranes (2, 3) sont munis d'éléments d'appui (10 ; 11 ; 18 ; 19 ; 20 ; 25) sur des faces situées en vis-à-vis.

2. Transducteur de pression différentielle selon la revendication 1, caractérisé en ce que les éléments d'appui (20) sont réalisés de façon à être isolants.

3. Transducteur de pression différentielle selon la revendication 1 ou 2, caractérisé en ce que, dans les éléments d'appui (25), sont formés des creux en forme de gorge (26) communiquant avec un canal de remplissage (6).

4. Transducteur de pression différentielle selon l'une quelconque des revendications précédentes, caractérisé en ce que le matériau isolant est un matériau céramique, de préférence une céramique d'oxyde d'aluminium.

5. Transducteur de pression différentielle, selon l'une quelconque des revendications précédentes, caractérisé en ce que le corps (1) d'une part et les membranes (2, 3) d'autre part sont liées par des anneaux d'écartement (4, 5) de soudure, de préférence de soudure de verre électriquement isolante.

Fig.1

Fig.2

Fig.3

Fig.4

Fig.5

Fig.6